# FASCICULE DE BREVET EUROPEEN

(11) **EP 1 963 434 B1**
(45) Date de publication et mention de la délivrance du brevet: **03.08.2011**
(21) Numéro de dépôt: 06829561.7
(22) Date de dépôt: 13.12.2006
(51) Int. Cl.: C04B 26/26

(54) **LIANT BITUMINEUX FLUXE, FLUXANT, PREPARATION ET APPLICATIONS DE CES PRODUITS**
GEFLUXTES BITUMENHALTIGES BINDEMITTEL, FLUSSMITTEL, HERSTELLUNG UND ANWENDUNGEN DIESER PRODUKTE
FLUXED BITUMINOUS BINDER, FLUXANT, PREPARATION AND APPLICATIONS OF THESE PRODUCTS

(30) Priorité: 14.12.2005 WO PCT/FR2005/053868
(43) Date de publication de la demande: 03.09.2008
(73) Titulaire: TOTAL RAFFINAGE MARKETING, 92800 Puteaux (FR)
(72) Inventeur: GODIVIER, Charlotte, F-69230 Saint Genis Laval (FR); MARIOTTI, Sophie, 78220 Viroflay (FR); BARJON, Danielle, F-38370 Les Roches De Condrieu (FR); BOUSQUET, Jacques, F-69540 Irigny (FR)
(74) Mandataire: Cabinet Plasseraud
(86) Numéro de dépôt international: PCT/EP2006/011985
(87) Numéro de publication internationale: WO 2007/068461

(56) Documents cités:
- EP-A- 0 900 822
- CA-A2- 1 186 854
- GB-A- 862 544
- GB-A- 1 250 641
- US-A- 1 948 422
- US-A1- 2003 212 168
- US-B1- 6 306 937
- 'Coupe', [en ligne] 2008, pages 1 - 2 Centre national de Resources Textuelles et Lexicales Extrait de l'Internet: <URL:http://www.cnrtl.fr/definitionlcoupe>
- 'Fraction', [en ligne] page 1 Extrait de l'Internet: <URL:http://www.granddictionnaire.com/btml/ fra/r_motclef/fiche.asp>
- SOCIÉTÉ ARMKEMA: 'Esters, Esterol A, Esterol 11', [en ligne] page 1 Extrait de l'Internet: <URL:http://www.arkema.com/sites/group/fr/p roducts/product_viewer.page?_filepath=/temp latedata/Content/Product_Datasheet/data/fr/ technical_polymers/060331_esters.xml>
- 'Huile de Ricin', [en ligne] pages 1 - 4 Wikipedia Extrait de l'Internet: <URL:http://fr.wikipedia.org/wiki/Huile_de_ ricin>

## Description

La présente invention est relative aux bitumes utilisés comme liants routiers. Plus précisément, l'invention concerne des liants bitumineux fluxés se présentant sous forme anhydres ou sous forme d'émulsions.

L'invention a plus spécialement trait aux liants bitumineux constitués par des liants mélangés avec des fluxants permettant d'abaisser significativement la viscosité des bitumes.

L'invention vise ainsi tout d'abord une nouvelle utilisation de composés à titre de fluxant de même que les produits incorporant ces composés comme additifs, à savoir :
- les liants bitumineux fluxés, modifiés avec un ou plusieurs polymères réticulés ou non in situ ;
- les solutions à base de polymères susceptibles d'être utilisées pour la préparation de bitumes polymères et comprenant les composés utilisés comme fluxant conformément à l'invention. Ces solutions sont appelées solutions mères concentrées et peuvent, le cas échéant, renfermer ou non un agent de réticulation chimique ;
- les émulsions à base de liants bitumineux fluxés modifiés ou non avec un ou plusieurs polymères et/ou à base de solutions mères.

L'invention inclut également :
- les procédés de préparation desdits liants bitumineux, solutions-mères concentrées en polymère fluxées et émulsions susvisés,
- les applications desdits liants bitumineux à titre de matériau de construction, de revêtement routier ou comme matériau d'isolation, d'amortissement et/ou d'étanchéité.

Les liants bitumineux comportent généralement, d'une part, un liant bitumineux, à savoir par exemple une dispersion colloïdale de molécules d'asphaltènes dans une phase huileuse, et d'autre part, soit un solvant organique dans le cas des liants anhydres, soit une phase aqueuse associée à des tensioactifs ou savons dans le cas des émulsions. Les émulsions de bitume sont une forme d'application des bitumes permettant d'accéder à des formes liquides fluides manipulables à froid; c'est-à-dire par exemple à une température de l'ordre de 20 à 80°C. Ces émulsions sont obtenues en dispersant le bitume en globules de quelques microns de diamètre, dans une phase aqueuse additionnée d'émulsifiants. Les émulsions comprennent les émulsions anioniques, non ioniques ainsi que les émulsions cationiques qui représentent actuellement la majorité des fabrications. Dans chacune de ces catégories, les émulsions se distinguent par la teneur en liant bitumineux, la vitesse de rupture et la viscosité.

Ces "liants routiers" sont notamment destinés à être mélangés avec des granulats pour former des revêtements routiers. C'est ainsi que l'on distingue:
- les "enrobés à chaud" obtenus par mélange à chaud de liants bitumineux anhydres avec des granulats, ces mélanges étant ensuite répandus sur la chaussée pour former des revêtements routiers;
- les "enduits superficiels" à base de liants bitumineux anhydres obtenus par épandage sur la chaussée tout d'abord de liants bitumineux anhydres puis ensuite de granulats;
- les "enrobés à froid" obtenus par mélange à froid d'émulsions bitumineuses avec des granulats, ces mélanges étant ensuite répandus sur la chaussée pour former des revêtements routiers.

Il est possible d'améliorer les propriétés mécaniques des bitumes en les mélangeant avec un ou plusieurs polymères (polyoléfines, styrène-butadiène, styrène-butadiène-styrène, etc.), et éventuellement en les réticulant chimiquement ou non in situ.

Parmi les liants bitumineux, en particulier ceux anhydres ou sous forme d'émulsions, on peut citer notamment ceux comprenant des bitumes purs, des bitumes fluidifiés, des bitumes fluxés et des bitumes oxydés, ainsi que ces bitumes comprenant des (co)polymères.

La fluidification, le fluxage, la mise en émulsion et le chauffage des bitumes sont des moyens utilisés indépendamment ou en combinaison entre eux pour donner aux liants bitumineux une rhéologie qui soit adaptée à leur application et/ou qui permette l'obtention de propriétés mécaniques optimales pour les applications par exemple routières visées.

Les bitumes fluxés sont des compositions de bitume(s) obtenues à partir de bitumes dont on a abaissé la viscosité par addition de solvants en partie volatil. Ces bitumes fluxés autorisent des températures d'emploi par exemple entre 50°C et 180°C. Les espèces les plus visqueuses de bitumes fluxés sont généralement réservées aux enduits superficiels, tandis que les plus fluides sont généralement utilisées pour l'imprégnation, la stabilisation des sols, pour la fabrication des émulsions et la préparation des enrobés à froid stockables.

Les bitumes fluidifiés sont obtenus par mélange de liants bitumineux avec des huiles carbochimiques ou pétrolières. Les bitumes fluxés diffèrent des bitumes fluidifiés, en particulier par la courbe de distillation de leurs fluxants, plus étendue vers le haut essentiellement.

Selon la terminologie adoptée dans le cadre du présent exposé, les liants bitumineux fluidifiés et les liants bitumineux fluxés sont regroupés dans une seule et même catégorie, les termes "fluxés" et "fluidifiés" étant ainsi considérés comme synonymes.

Il est connu que les fluxants/fluidifiants constitués par des produits pétroliers ou par des solvants organiques présentent l'inconvénient d'émettre des composés organiques volatils lors de leur évaporation après application. De plus, leur point éclair est assez bas (50-80°C), ce qui induit des contraintes de stockage et de transport particulières.

Pour pallier les défauts des fluxants/fluidifiants d'origine pétrolière, des fluxants/fluidifiants végétaux ont été proposés.

Ainsi, la demande de brevet EP-A-0 900 822 concerne l'utilisation comme fluidifiant ou comme fluxant, dans un liant bitumineux anhydre ou en émulsion, d'esters méthyliques d'acides gras obtenus par transestérification d'huiles végétales. Le durcissement du liant est obtenu par réticulation du fluidifiant, en présence de l'oxygène de l'air et d'un catalyseur.

Dans ce contexte, la Demanderesse s'est attachée à développer de nouveaux fluxants/fluidifiants végétaux constituant des alternatives avantageuses par rapport aux fluxants/fluidifiants d'origine végétale connus, ces alternatives présentant éventuellement des propriétés améliorées: manipulation et utilisation plus aisées des liants fluxés obtenus (viscosité moindre, stabilité au stockage, toxicité réduite et bonnes performances techniques en cohésion et adhésion).

En particulier, la demanderesse a cherché à mettre au point un fluxant pour liants bitumineux, répondant pleinement à tout ou partie des spécifications énoncées ci-après.
c) Aptitude à la fluidification de bitume pétrolier de toute origine.
d) Amélioration de la stabilité du liant bitume-polymère au stockage.
e) Amélioration de la stabilité au vieillissement d'enduits superficiels routiers.
f) Toxicité réduite se traduisant notamment par une classification des fluxants, selon la réglementation CE, où ne figurent pas les risques R40 et R45.
g) Compatibilité du fluxant avec d'éventuels polymères pour bitume, y compris éventuellement des réticulants chimiques polymères et notamment élastomères pour bitume, de manière à pouvoir former des solutions mères concentrées en polymères stables.
h) Aptitude à former des solutions concentrées en polymères stables renfermant éventuellement des réticulants chimiques.
i) Possibilité de transformer aisément en émulsion stable des bitumes fluxés ou bitume/polymère fluxés par ajout d'eau et de tensioactifs.
j) Utilisable dans les conditions habituelles de mise en oeuvre.
k) Facilité d'emploi des liants bitumineux fluxés: e.g. revêtements routiers.
l) Contribution à l'obtention d'un bitume présentant toutes les propriétés requises en termes d'application au jeune âge et à moyen et long terme : adhésivité, cohésivité, résistance mécanique et stabilité.

Dans cet état de faits, l'un des objectifs essentiels de la présente invention est de fournir un liant bitume-polymère, sous forme notamment d'émulsion ou de liant hydrocarboné anhydre, comprenant un fluxant végétal satisfaisant à au moins l'une des spécifications a) à j) du cahier des charges susvisé.

Un autre objectif essentiel de l'invention est de fournir un additif de fluxage et/ou de fluidification satisfaisant à au moins l'une des spécifications susvisées.

Un autre objectif essentiel de l'invention est de fournir un procédé de préparation de la solution mère à base de fluxant et comprenant une concentration élevée en polymère(s).

Un autre objectif essentiel de l'invention est de fournir un procédé de préparation du liant bitumineux sous forme de liant hydrocarboné anhydre ou d'émulsion et comprenant l'additif de fluxage et/ou de fluidification tel que défini ci-dessus.

Un autre objectif essentiel de l'invention est de proposer l'application d'un fluxant répondant à l'une au moins des spécifications a) à j) mentionnées ci-dessus, à titre d'additif dans un liant bitumineux sous forme de liant hydrocarboné anhydre, d'émulsion, ou dans une solution concentrée fluxant/polymère utile pour la préparation d'un tel liant bitumineux.

Un autre objectif essentiel de l'invention est de proposer l'application de liants bitumineux fluxés à l'aide d'un fluxant tel que défini dans les objectifs ci-dessus, ledit liant bitumineux étant destiné à la fabrication/réparation/maintenance de revêtements routiers, en particulier d'enduits superficiels.

Ces objectifs, parmi d'autres, sont atteints par la présente invention qui concerne tout d'abord un liant bitumineux comprenant au moins un bitume **B,** au moins un polymère **P** réticulé ou non et au moins un fluxant **F,**
caractérisé en ce que le fluxant **F** comprend au moins une coupe dérivée de l'huile de ricin, ladite coupe comprenant au moins un ester méthylique d'acide(s) gras.

Le fluxant **F** selon un mode préféré de l'invention est à base d'au moins un dérivé de l'huile de ricin, en particulier au moins un ester méthylique d'acide(s) gras (EMAG). Plus particulièrement, cet ester EMAG est un mélange d'esters méthyliques dont la majorité (c'est-à-dire au moins 50% molaire, de préférence au moins 75% molaire) est constituée d'esters d'acides gras saturés ou insaturés comprenant en moyenne 18 atomes de carbone.

De nombreuses voies de synthèses de ce type de mélange d'esters EMAG sont envisageables. Une des voies les plus connues comprend l'alcoolyse (transestérification) de l'huile de ricin suivi ou non d'un craquage, au terme duquel le(s)dit(s) EMAG(s) est (sont) récupéré(s). Plus précisément, l'huile de ricin comprend plusieurs acides gras saturés et insaturés, principalement en C16 et en C18. Dans le procédé de Marseille, l'huile de ricin subit une série de transformations physico-chimiques qui conduit à quatre coupes principales :
- Coupe en C3 : constituée de glycérol. Cette coupe provient de la transestérification des triglycérides de l'huile de ricin en présence de méthanol. Cette transestérification conduit à la formation d'esters méthyliques d'acides gras ;
- Coupe en C7 : constituée d'heptanal et d'autres dérivés, utilisée notamment dans l'industrie des parfums ;
- Coupe en C11 : comprenant de l'undécylénate de méthyle et ses dérivés, utilisée dans diverses synthèses ;
- Coupe en C18 : comprenant des esters méthyliques d'acides gras insaturés ou saturés

Les coupes en C7 et C11 proviennent du craquage thermique de l'acide ricinoléique, un acide gras insaturé et hydroxylé caractéristique de l'huile de ricin.

La coupe en C18 comprend des esters méthyliques d'acides gras présents dans l'huile de ricin, autres que l'acide ricinoléique. Il s'agit notamment des acides oléique (C18 : 1), linoléique (C 18 : 2), palmitique (C16 : 0) et stéarique (C 18 : 0).

Il est donc du mérite des inventeurs d'avoir sélectionné parmi les innombrables espèces et mélanges d'acides gras ou dérivés (esters) végétaux susceptibles d'être utilisées comme fluxants, une famille particulière et parfaitement délimitée de coupes végétales issues de l'huile de ricin.

Cette sélection a permis notamment d'isoler des fluxants **F** efficaces et satisfaisant à au moins l'une -de préférence plusieurs- des spécifications a) à j) susvisées.

En particulier, ces EMAGs ont l'avantage d'être facilement accessibles et de permettre des abaissements de viscosité de bitume tout à fait significatifs.

Il doit également être noté que les fluxants **F** selon l'invention peuvent être utilisés dans des solutions mères fluxant / polymère(s) pour bitumes stables, compatibles et permettant de disposer d'un précurseur facile à stocker et à manipuler pour la préparation de liants bitumineux.

Ces EMAGs sont des substances végétales biodégradables peu ou pas toxiques pour l'environnement, pour les opérateurs et pour les usagers. Selon la réglementation en vigueur, les produits les contenant ne sont donc pas étiquetés, et notamment ne sont pas R40 ou R45. Cela correspond parfaitement aux attentes du marché en matière d'auxiliaire d'abaissement de la viscosité des bitumes.

Par ailleurs, il est également à noter que la nouvelle utilisation, selon l'invention, de dérivés de l'huile de ricin, en particulier des EMAGs décrits ci avant, comme fluxant des bitumes permet d'obtenir des liants bitume-polymère obtenu ou non à l'aide d'une solution concentrée fluxant / polymère, qui présente une très bonne adhésivité avec les granulats auxquels ils sont destinés à être mélangés pour les applications dans les revêtements routiers.

La pénétrabilité et la cohésion du liant sont également parfaitement correctes, illustrés d'ailleurs par les exemples ci-après.

En outre, la mise en oeuvre selon l'invention de dérivés de l'huile de ricin-issus par exemple de la transformation de l'huile de ricin en acide 1-aminoundécanoïque, en particulier des EMAGs (avec de préférence au moins une coupe en C18) procure au liant bitumineux une amélioration de la stabilité au stockage. Le bénéfice de l'utilisation de ces sous-produits s'observe également au niveau des revêtements routiers (e.g. enduits superficiels, enrobés in situ) comprenant le liant bitumineux. Ces revêtements voient en effet leur résistance au vieillissement s'accroître considérablement. Leurs propriétés mécaniques sont donc plus pérennes.

Sur une caractéristique remarquable de l'invention, le fluxant F comprend au moins un mélange d'EMAGs.

La coupe sélectionnée selon une modalité préférée de l'invention, comprend, par exemple, des esters méthyliques des acides gras en C18 dérivés de l'huile de ricin, c'est-à-dire en particulier choisi parmi les esters méthyliques des acides oléique (C18 : 1), linoléique (C 18 : 2), palmitique (C16 : 0) et/ou stéarique (C 18 : 0).

De manière plus préférée encore, le fluxant F comprend au moins un mélange d'EMAGs contenant notamment (la somme des pourcentages étant égale à 100%):
- du stéarate de méthyle, de préférence à raison de 5 à 20 % p/p, et, plus préférentiellement encore, à raison environ de 10 à 12% p/p,
- de l'oléate de méthyle de préférence à raison de 20 à 40 % p/p, et, plus préférentiellement encore à raison environ de 28 à 32% p/p,
- du linoléate de méthyle, de préférence à raison de 30 à 50 % p/p, et, plus préférentiellement encore à raison environ 38 à 42% p/p,
- du palmitate de méthyle, de préférence à raison de 1 à 20 % p/p, et, plus préférentiellement encore à raison environ 6 à 10 % p/p,
- ainsi que d'autres espèces en moindre quantité.

De préférence, le mélange d'EMAGs a un indice d'iode (g/100g) compris entre 50 et 200 de préférence entre 100 et 150 [ISO 3961 (NFT 60-203)] et/ou une teneur en esters C18 (% poids) supérieur ou égale à 50, de préférence supérieure ou égale à 75 [M077-519].

Suivant un premier mode de réalisation, le mélange d'EMAGs a un indice d'acide ISO 660 (NFT 60-204) inférieur ou égal à 5. En pratique dans ce premier mode de réalisation, le mélange d'EMAGs est par exemple un produit commercialisé sous la dénomination Estérol® A par la société Arkema ®. Les principales caractéristiques de l'Esterol A commercial sont les suivantes :

| Caractéristique | Unité | Mini | Maxi | Méthode |
|---|---|---|---|---|
| Indice d'acide | mg KOH/g | - | 5 | ISO 660 (NFT 60-204) |
| Indice d'iode | g/100g | 100 | 120 | ISO 3961 (NFT 60-203) |
| Teneur en esters C18 | % | 75 | - | MO77-519 |

Suivant un deuxième mode de réalisation, le mélange d'EMAGs a un indice d'acide ISO 660 (NFT 60-204) supérieur à 5, de préférence inférieur ou égal à 20, et, plus préférentiellement encore à 10.

Le choix de ces différentes coupes ou mélanges d'EMAG est justifié par le bon équilibre qu'il permettent d'atteindre entre le pouvoir fluxant à chaud et la réactivité de EMAG lors de l'application, ce qui favorise la consolidation des associations bitume-granulats.

Le bitume B peut être constitué par un seul type de bitume ou par un mélange de bitumes de différentes origines, tels que ceux que l'on utilise majoritairement dans la préparation des compositions bitume-polymère. Ces bitumes B peuvent être des bitumes naturels, des bitumes soufflés ou semi-soufflés, voire même certaines coupes pétrolières ou des mélanges de bitumes et de distillats sous vide (distillation directe ou de distillation sous pression réduite). Le bitume **B** peut être également obtenu en mélangeant différents effluents de raffinage comme les produits de desasphaltage, les résidus de viscoréduction, les produits de soufflage et/ou de l'asphalte naturel, en les associant éventuellement avec les résidus de distillation ci-avant.

Le bitume **B** est avantageusement choisi parmi les bitumes qui possèdent une pénétration, suivant la norme EN 1426, comprise entre 5 et 500, de préférence 5 et 300.

De préférence, le bitume employé n'est pas un bitume solide (par exemple la gilsonite), mais un bitume liquide ou pâteux.

Selon l'invention, le bitume **B** est modifié à l'aide d'au moins un composé de type polymère, en vue d'améliorer ses performances mécaniques et thermiques. Le polymère **P** réticulable que l'on utilise majoritairement pour préparer les compositions bitume/polymère et que l'on retrouve réticulé dans lesdites compositions, est par exemple présent dans la composition bitume/polymère finale en une quantité comprise entre 0,5 et 10 % rapportée au poids du bitume.

Plus particulièrement, ce polymère **P** réticulable consiste en un ou plusieurs copolymères choisis parmi les copolymères séquencés, notamment di- ou triséquencés, avec ou sans charnière statistique, de styrène et de butadiène, de styrène et d'isoprène, de styrène et de chloroprène, de styrène et de butadiène carboxylé, ou encore de styrène et d'isoprène carboxylée.

Les copolymères statistiques ou séquencés de styrène et d'un diène se mélangent très facilement dans les bitumes et confèrent à ces derniers d'excellentes propriétés mécaniques et dynamiques et notamment de très bonnes propriétés de viscoélasticité.

Le copolymère de styrène et de diène conjugué et, en particulier, chacun des polymères précités, possède avantageusement une teneur en styrène allant de 5 % à 50 % en poids.

La masse moléculaire moyenne en poids du copolymère de styrène et de diène conjugué, et plus généralement celle des copolymères (2) mentionnés ci-dessus, peut être comprise, par exemple, entre 10 000 et 600 000 Daltons et se situe de préférence entre 30 000 et 400 000 Daltons.

A titre d'exemples de polymères pour bitume, on peut citer les élastomères tels que les copolymères SB, SBS, SIS, SBS*, SBR, EPDM, polychloroprène, polynorbornène et éventuellement les polyoléfines tels que les polyéthylènes PE, PEHD, le polypropylène PP, les plastomères tels que les EVA, EMA, les copolymères d'oléfines et d'esters carboxyliques insaturés EBA, les copolymères polyoléfines élastomères, les polyoléfines du type polybutène, les copolymères de l'éthylène et d'esters de l'acide acrylique, méthacrylique ou de l'anhydride maléique, les copolymères et terpolymères d'éthylène et de méthacrylate de glycydile les copolymères éthylène-propylène, les caoutchoucs, les polyisobutylènes, les SEBS, les ABS.

Signification des abréviations :
- SB :: copolymère à blocs du styrène et du butadiène
- SBS :: copolymère à blocs styrène- butadiène-styrène
- SBS* :: copolymère à blocs styrène- butadiène-styrène en étoile
- PP :: polypropylène
- EVA :: copolymère polyéthylène-acétate de vinyle
- EBA :: copolymère polyéthylène-acrylate de butyle
- PE :: polyéthylène
- EPDM :: éthylène propylène diène modifié
- SIS :: styrène-isoprène-styrène
- EMA :: copolymère polyéthylène-acrylate de méthyle
- SEBS :: copolymère du styrène, de l'éthylène, du butylène et du styrène
- ABS :: acrylonitrile-butadiène-styrène
- PEHD :: polyéthylène haute densité
- SBR :: styrène-b-butadiène-rubber

Selon une variante avantageuse, le liant bitumineux selon l'invention comprend au moins un siccatif S.

Pour optimiser les performances du liant selon l'invention, il peut être avantageux de choisir le siccatif S facultatif parmi les métaux, pris à eux seuls ou en mélange entre eux, de préférence dans le groupe comprenant le cobalt, le manganèse, le calcium ou le zirconium et leurs mélanges, et, plus préférentiellement encore parmi:
- les sels d'acides carboxyliques de ces métaux, avantageusement les stéarates et/ou les octoates et/ou les naphténates
- et/ou les oxydes de ces métaux, en particulier les oxydes de cobalt, manganèse, calcium ou zirconium.

A titre d'exemples de siccatifs S convenables, on peut citer l'octoate de cobalt, l'octoate de zirconium et l'octoate de manganèse (ex : Octasoligen 69HS® et MnBHS® de Borchers).

Suivant une autre caractéristique remarquable de l'invention, le liant bitumineux comprend de préférence (en % en poids):
- de 70 à 99, de préférence 90 +/- 5 de bitume B,
- de 1 à 20, de préférence 8+/- 3 de fluxant F,
- de 0,0001 à 10, de préférence 5+/- 2 de polymère P,
- de 0 à 5, de préférence de 0,9 +/- 0,7 de siccatif S .

Le liant bitumineux selon l'invention peut être, soit sous forme de liant hydrocarboné anhydre, soit sous forme d'émulsion aqueuse comprenant au moins un tensioactif.

Ainsi dans le cas où le liant bitumineux est un liant hydrocarboné anhydre, il peut contenir, par exemple:
**1.** au moins un bitume **B,**
**2.** au moins un fluxant **F** tel que défini ci-dessus ou du fluxant issu de l'utilisation telle que définie ci-dessus,
**3.** au moins un polymère **P** réticulé ou non,
**4.** éventuellement au moins un siccatif **S,**
**5.** et éventuellement au moins un agent de réticulation **AR.**

A titre d'exemples de liants hydrocarbonées anhydres **1 + 2 + 3 + 4 + 5,** on peut citer les compositions caractérisées par les proportions suivantes : 50 à 95 % en poids de 1, **1** à 20% en poids de **2,** 0,0001 à 10 % en poids de **3,** 0 à 5 % en poids de **4,** 0 à 5% en poids de **5.**

Comme cela a déjà été précisé, le fluxant F selon l'invention n'est pas seulement approprié pour fluxer des liants hydrocarbonés anhydres, mais peut également entrer dans la composition d'émulsions bitumineuses.

Dans le cas où le liant bitumineux est une émulsion celle-ci peut contenir, par exemple:
**1'/** au moins un bitume **B,**
**2'/** au moins un fluxant **F** tel que défini ci-dessus ou du fluxant issu de l'utilisation telle que définie ci-dessus,
**3'/** au moins un polymère **P,**
**4'/** éventuellement au moins un siccatif **S,**
**5'/** au moins un tensioactif **T,**
**6'/** et de l'eau.

Pour donner une illustration quantitative de ces formulations d'émulsions selon l'invention, on se référera par exemple à la composition suivante : 50 à 80 % en poids de **1',** 0.5 à 20 % en poids de **2',** 0,0001 à 10 % en poids de **3',** 0 à 5 % en poids de **4',** 0,01 à 2 % en poids du tensioactif, **5',** 20 à 50 % en poids d'eau **6'.**

S'agissant des tensioactifs **T,** il s'agit des savons classiquement employés dans les émulsions bitumineuses. Les émulsions de bitume ainsi fluxées conformément à l'invention sont des compositions facilement applicables à froid, par exemple à des températures comprises entre 50 et 80°C dans le domaine des revêtements routiers.

L'un des intérêts de l'invention est lié au fait que l'huile de ricin et/ou les dérivés d'huile de ricin isolés conformément à l'invention, peuvent être également utilisés pour la préparation de solution concentrée en polymère(s), c'est-à-dire de solution concentrée à base de polymères pour bitumes et de fluxant.

Ces solutions concentrées en polymères sont des précurseurs facilement stockables offrant à l'utilisateur final, la possibilité de réaliser au dernier moment et selon la demande, la production de compositions bitume-polymère.

De telles solutions concentrées en polymère peuvent contenir en outre, éventuellement, un réticulant chimique **AR,** seul ou en combinaison, incluant un ou des réactif(s) connu(s) de l'homme de l'art parmi lesquels on trouve notamment le soufre, les donneurs de soufre ainsi que d'autres composés tels que des acides minéraux ou organiques fonctionnalisés, des peroxydes.

Ainsi, l'invention concerne une solution mère utile pour la préparation de liants bitumineux caractérisée en ce qu'elle comprend:
- au moins un fluxant F tel que défini supra,
- au moins un polymère P réticulé ou non pour liant bitumineux,
- éventuellement au moins un siccatif S tel que défini supra.

Avantageusement, le pourcentage en poids de fluxant **F** par rapport au poids total de la solution mère est compris entre 10 et 90%, de préférence entre 20 et 60%, et le pourcentage en poids de polymère par rapport au poids total de la solution mère est compris entre 1 et 30%, de préférence entre 5 et 20%.

Selon un autre de ses aspects, l'invention concerne un additif pour liant bitumineux ou pour solution mère caractérisé en ce qu'il comprend :
- au moins un fluxant F tel que défini ci-dessus,
- et éventuellement au moins un siccatif S tel que défini ci-dessus.

De préférence, cet additif est destiné à un liant bitume-polymère qui est sous forme de liant hydrocarboné anhydre comprenant éventuellement au moins un polymère réticulé ou non. Cet additif peut être également utilisé au sein de liants d'origine végétale et/ou animale.

Selon un autre de ses aspects relatifs aux applications routières des liants bitumineux selon l'invention, l'invention concerne une association bitume/granulat caractérisée en ce qu'elle comprend un liant bitume-polymère tel que défini ci-dessus et des granulats.

De préférence, cette association peut être soit un enduit superficiel obtenu à chaud ou à froid, soit un enrobé à chaud ou à froid.

Ces enrobés bitumineux sont stables au stockage et peuvent être utilisés à chaud ou à froid.

Les granulats utilisés pour la fabrication d'enrobés à l'aide des liants bitumineux comprenant le fluxant selon l'invention peuvent être de tous types connus et appropriés.

L'invention vise également:
- l'utilisation d'au moins un fluxant **F** tel que défini ci-dessus et éventuellement d'au moins un siccatif S tel que défini ci-dessus, à titre de système fluxant dans un liant bitume-polymère;
- l'utilisation dans un liant bitume-polymère d'au moins un fluxant F tel que défini ci-dessus, et éventuellement d'au moins un siccatif S tel que défini supra, à titre d'agent pour améliorer la stabilité du liant bitume-polymère au stockage;
- et l'utilisation dans un liant bitume-polymère d'au moins un fluxant F tel que défini ci-dessus, et éventuellement d'au moins un siccatif S tel que défini supra, à titre d'agent pour d'améliorer la stabilité au vieillissement d'enduits superficiels routiers.

Les procédés de préparation des liants bitume-polymère sont similaires à ceux généralement utilisés pour les bitumes fluxés. Par exemple, le procédé consiste à mélanger un bitume **B** avec un polymère **P** (avec ou sans agent réticulant **AR)** auquel on ajoute un fluxant **F** tel que défini supra et éventuellement d'autres additifs. Une autre voie consiste à partir d'une solution mère à laquelle on ajoute le bitume.

L'invention vise en outre l'utilisation du liant bitumineux selon l'invention pour l'entretien, la réparation ou la fabrication de revêtements routiers, et en particulier pour la fabrication d'un enduit superficiel.

Outre les applications routières, les liants bitume-polymère selon l'invention, à base de liants hydrocarbonées anhydres et/ou d'émulsions, peuvent faire l'objet d'utilisation dans le domaine varié des applications industrielles: matériaux d'isolation phonique et/ou d'étanchéité et/ou d'amortissement de vibrations, etc.

L'invention concerne donc aussi l'utilisation du liant pour des applications industrielles, en particulier à titre de matériau de construction ou comme matériau d'isolation, d'amortissement et/ou d'étanchéité.

L'invention sera mieux comprise et ses avantages apparaîtront bien à la lecture des exemples qui suivent, donnés à titre non limitatif.

### EXEMPLES:

Les propriétés des produits testés sont exprimées selon les caractéristiques suivantes:
- Pénétrabilité à l'aiguille à 25°C : exprimée en 1/10 mm (NF EN 1426).
- Température de ramollissement bille et anneau (TBA): exprimée en degré Celsius (EN 1427).
- Adhésivité active: exprimé en % (NF EN 12272-3)
- Cohésivité au mouton-pendule: exprimée en J/cm2 (EN 13588)
- Caractéristiques rhéologiques par traction: mesurées (EN 13587).

Contrainte à l'élongation maximale en MPa.

Allongement à l'élongation maximale en %.
- Stabilisation 3 jours (1 jour à température ambiante, 1 jour à 50°C et 1 jour à 85°C): il s'agit d'une méthode d'obtention du liant. Elle est réalisée suivant le projet de norme prEN 14895.
- Point éclair Luchaire: exprimé en °C (NF T 60-103).
- Pseudo-viscosité STV à 50°C, diamètre 10 mm, exprimée en s (NF EN 13357)

Les produits mis en oeuvre dans les exemples sont:
- Bitume-polymère, Bp1, réticulé avec pénétrabilité de 54 1/10 mm et une de Température bille-anneau de 58.6 °C (produit Total France).
- Bitume-polymère fluxé, Bp2, avec un solvant pétrolier, Bp2 présentant une pseudo-viscosité à 50°C, diamètre 10mm de 146 (produit Total France).
- Mélange d'ester méthyliques d'acides gras issus de la transformation de l'huile de ricin F1 (Estérol A)
- Huile de ricin F2.

### Préparation d'un liant selon l'invention

Cet exemple concerne des compositions bitume-polymère fluxées selon l'invention. Il permet de comparer les caractéristiques du liant fluxé selon l'invention à celles obtenues avec le bitume-polymère fluxé Bp2 ainsi qu'à celles obtenues avec le liant fluxé à l'huile de colza.

Les préparations des liants selon l'invention sont réalisées à 140°C, dans un réacteur sous agitation. (100-x)% en masse d'un liant **Bp1** sont introduits dans le réacteur. Ensuite, nous ajoutons x% en poids de fluxant avec x = 8% pour le liant **Bp1** avec **F1,** x = 12.5 pour le liant **Bp1** avec **F2.**

Les mélanges sont agités pendant environ 30 minutes. Leur aspect final est homogène.

Ces préparations ont ensuite été stabilisées suivant le projet de norme pr EN 14895.

| | Liant **Bp2** | Liant **Bp1** avec fluxant **F2** | Liant **Bp1** avec fluxant F1 |
|---|---|---|---|
| Caractéristiques du Liant neuf | | | |
| Point éclair Luchaire | 126 | 298 | 220 |
| Adhésivité active | 98 | 94 | 95 |

| Caractéristiques du Liant stabilisé | | | |
|---|---|---|---|
| Pénétrabilité | 79.1 | 185 | 198 |
| TBA | 52.5 | 46.7 | 44.2 |
| Traction 5°C, 500mm/min | | | |
| Contrainte à l'élongation maximale en MPa | 0.57 | 0.27 | 0.29 |
| Allongement à l'élongation maximale en %. | 700 | 700 | 700 |
| Cohésivité au mouton pendule Valeur maximum (J/cm²) | 1.40 | 1.39 | 1.38 |
| Température correspondante (°C) | 40 | 25 | 25 |

Ces exemples montrent que l'invention permet d'atteindre les spécifications a à k et en particulier les spécifications suivantes:
**a.** Aptitude à la fluidification de bitume-polymère.
**e.** Compatibilité du fluxant avec polymères pour bitume y compris éventuellement des réticulants chimiques polymères notamment élastomères pour bitume, de manière à pouvoir former des solutions mères concentrées en polymères stables.
**j.** Contribution à l'obtention d'un bitume présentant toutes les propriétés requises en termes d'application au jeune âge et à moyen et long terme : adhésivité, cohésivité, résistance mécanique et stabilité.

## Revendications

1. Liant bitumineux comprenant au moins un bitume **B,** au moins un polymère **P** réticulé ou non, et au moins un fluxant **F,**
**caractérisé en ce que** le fluxant **F** comprend au moins une coupe dérivée de l'huile de ricin, ladite coupe comprenant au moins un ester méthylique d'acide(s) gras (EMAG).

2. Liant bitumineux selon la revendication 1 **caractérisé en ce que** ladite coupe comprend un mélange d'esters méthyliques d'acides gras dont la majorité est constituée d'acides gras saturés ou insaturés comprenant 18 atomes de carbone.

3. Liant bitumineux selon la revendication 1 ou 2 **caractérisé en ce que** les esters méthyliques des acides gras sont des dérivés de l'huile de ricin choisis parmi les esters d'acides oléique (C18 : 1), linoléique (C18 : 2), palmitique (C16 : 0) et/ou stéarique (C18 : 0).

4. Liant bitumineux selon la revendication 3 **caractérisé en ce que** le mélange d' esters méthyliques d'acides gras a un indice d'iode (g/100g) compris entre 100 et 120 [ISO 3961 (NFT 60-203)] et/ou une teneur en esters C18 (% poids) supérieure ou égale à 75 [MO77-519].

5. Liant bitumineux selon l'une quelconque des revendications précédentes **caractérisé en ce qu'**il comprend au moins un siccatif S.

6. Liant bitumineux selon l'une quelconque des revendications précédentes **caractérisé en ce qu'**il comprend en % en poids :
- de 70 à 99, de préférence 90 +/- 5 de bitume B,
- de 1 à 20, de préférence 8+/- 3 de fluxant F,
- de 0,0001 à 10, de préférence 5+/- 2 de polymère P,
- de 0 à 5, de préférence de 0,9 +/- 0,7 de siccatif S.

7. Liant bitumineux selon l'une quelconque des revendications précédentes **caractérisé en ce qu'**il est sous forme de liant hydrocarboné anhydre.

8. Liant bitumineux selon l'une quelconque des revendications 1 à 6 **caractérisé en ce qu'**il est sous forme d'émulsion aqueuse comprenant au moins un tensioactif.

9. Solution mère concentrée en polymère P utile pour la préparation de liants bitumineux selon l'une quelconque des revendications 1 à 8 **caractérisée en ce qu'**elle comprend :
- au moins un fluxant F tel que défini dans au moins l'une des revendications 1 à 4,
- au moins un polymère P réticulé ou non, pour liant bitumineux,
- et éventuellement au moins un siccatif S.

10. Association bitume/granulat **caractérisée en ce qu'**elle comprend un liant bitumineux selon l'une quelconque des revendications 1 à 8, et des granulats.

11. Additif pour liant bitume-polymère ou pour solution mère **caractérisé en ce qu'**il comprend :
- au moins un fluxant F tel que défini dans au moins l'une des revendications 1 à 4,
- et au moins un siccatif S.

12. Utilisation
- d'au moins un fluxant F tel que défini dans au moins l'une des revendications 1 à 4,
- et d'au moins un siccatif S,
à titre de système fluxant F dans un liant bitume-polymère.

13. Utilisation d'au moins une coupe dérivée de l'huile de ricin, ladite coupe comprenant au moins un ester méthylique d'acide(s) gras (EMAG), à titre de fluxant F dans un liant bitume-polymère réticulé ou non.

14. Utilisation du liant bitumineux selon l'une quelconque des revendications 1 à 8 pour l'entretien, la réparation ou la fabrication de revêtements routiers.

15. Utilisation du liant bitumineux selon l'une quelconque des revendications 1 à 8 pour la fabrication d'un enduit superficiel.

16. Utilisation du liant bitumineux selon l'une quelconque des revendications 1 à 8 pour des applications industrielles.

17. Utilisation du liant bitumineux selon l'une quelconque des revendications 1 à 8 à titre de matériau de construction, d'isolation, d'amortissement et/ou d'étanchéité.

## Claims

1. Bituminous binder comprising at least one bitumen **B,** at least one polymer **P** which may or may not be cross-linked, and at least one fluxing agent **F,**
**characterised in that** the fluxing agent **F** comprises at least one fraction derived from castor oil, said fraction comprising at least one fatty acid(s) methyl ester (FAME).

2. Bituminous binder as claimed in claim 1, **characterised in that** said fraction comprises a mixture of fatty acid methyl esters, the majority of which is made up of saturated or unsaturated fatty acids with 18 carbon atoms.

3. Bituminous binder as claimed in claim 1 or 2, **characterised in that** the fatty acid methyl esters are derivatives of castor oil selected from the esters of oleic acid (C18 : 1), linoleic acid (C18 : 2), palmitic acid (C16 : 0) and/or stearic acid (C18 : 0).

4. Bituminous binder as claimed in claim 3, **characterised in that** the mixture of fatty acid methyl esters has an iodine index (g/100g) ranging between 100 and 120 [ISO 3961 (NFT 60-203)] and/or a C18 ester content (% by weight) in excess of or equal to 75 [MO77-519].

5. Bituminous binder as claimed in any one of the preceding claims, **characterised in that** it comprises at least one drying agent S.

6. Bituminous binder as claimed in any one of the preceding claims, **characterised in that** it comprises, as a % by weight :
- 70 to 99, preferably 90 +/-5, of bitumen B,
- 1 to 20, preferably 8 +/-3, of fluxing agent F,
- 0.0001 to 10, preferably 5 +/-2, of polymer P,
- 0 to 5, preferably 0.9 +/-0.7, of drying agent S.

7. Bituminous binder as claimed in any one of the preceding claims, **characterised in that** it is in the form of anhydrous hydrocarbonated binder.

8. Bituminous binder as claimed in any one of the claims 1 to 6, **characterised in that** it is in the form of aqueous emulsion containing at least one surfactant.

9. Master solution concentrated with polymer P for use in the preparation of bituminous binders as claimed in any one of claims 1 to 8, **characterised in that** it comprises:
- at least one fluxing agent F as defined in at least one of claims 1 to 4,
- at least one polymer P, which may or may not be cross-linked, for a bituminous binder,
- and optionally at least one drying agent S.

10. Bitumen/granulate combination **characterised in that** it comprises a bituminous binder as claimed in any one of claims 1 to 8 and granulates.

11. Additive for a bitumen-polymer binder or for a master solution, **characterised in that** it comprises:
- at least one fluxing agent F as defined in at least one of claims 1 to 4,
- and at least one drying agent S.

12. Use
- of at least one fluxing agent F as defined in at least one of claims 1 to 4
- and at least one drying agent S
as a fluxing agent F system in a bitumen-polymer binder.

13. Use of at least one fraction derived from castor oil, said fraction containing at least one fatty acid(s) methyl ester (FAME) as a fluxing agent F in a bitumen-polymer (cross-linked or not) binder.

14. Use of the bituminous binder as claimed in any one of claims 1 to 8 for maintaining, repairing or manufacturing road surfaces.

15. Use of the bituminous binder as claimed in any one of claims 1 to 8 for manufacturing a surface coating.

16. Use of the bituminous binder as claimed in any one of claims 1 to 8 for industrial applications.

17. Use of the bituminous binder as claimed in any one of claims 1 to 8 as a construction, isolating, damping and/or sealing material.

## Patentansprüche

1. Bitumenhaltiges Bindemittel, das mindestens ein Bitumen B, mindestens ein vernetztes oder unvernetztes Polymer P und mindestens ein Flussmittel umfasst, **dadurch gekennzeichnet, dass** das Flussmittel F mindestens einen vom Rhizinusöl abgeleiteten Bestandteil umfasst, welcher mindestens einen Fettsäuremethylester enthält.

2. Bitumenhaltiges Bindemittel gemäß Anspruch 1, **dadurch gekennzeichnet, dass** der besagte Bestandteil eine Mischung aus Fettsäuremethylestern enthält, von denen die Mehrzahl aus gesättigten oder ungesättigten Fettsäuren besteht, die 18 Kohlenstoffatome enthalten.

3. Bitumenhaltiges Bindemittel gemäß Anspruch 1 oder 2, **dadurch gekennzeichnet, dass** die Fettsäuremethylester Derivate des Rhizinusöls sind, die aus den Estern der Ölsäure (C18:1), der Linolsäure (C18:2), der Palmitinsäure (C16:0) und/oder der Stearinsäure (C18:0) ausgewählt sind.

4. Bitumenhaltiges Bindemittel gemäß Anspruch 3, **dadurch gekennzeichnet, dass** die Mischung der Fettsäuremethylester einen Iodindex (g/100 g) zwischen 100 und 120 [ISO 3961 (NFT 60-203)] und/oder einen Gehalt an C18-Estern (Gew.-%) von 75 [MO77-519] oder mehr hat.

5. Bitumenhaltiges Bindemittel gemäß irgendeinem der vorangehenden Ansprüche, **dadurch gekennzeichnet, dass** es mindestens ein Trocknungsmittel S enthält.

6. Bitumenhaltiges Bindemittel gemäß irgendeinem der vorangehenden Ansprüche, **dadurch gekennzeichnet, dass** es in Gew.-% enthält:
- 70 bis 99, bevorzugt 90 +/- 5 Bitumen B,
- 1 bis 20, bevorzugt 8 +/- 3 Flussmittel F,
- 0,0001 bis 10, bevorzugt 5 +/- 2 Polymer P,
- 0 bis 5, bevorzugt 0,9 +/- 0,7 Trocknungsmittel S.

7. Bitumenhaltiges Bindemittel gemäß irgendeinem der vorhergehenden Ansprüche, **dadurch gekennzeichnet, dass** es in der Form eines wasserfreien Kohlenwasserstoffbindemittels ist.

8. Bitumenhaltiges Bindemittel gemäß irgendeinem der vorangehenden Ansprüche 1-6, **dadurch gekennzeichnet, dass** es die Form einer wäßrigen Emulsion hat, die mindestens ein oberflächenaktives Mittel enthält.

9. Gesättigte Mutterlösung des Polymers P, die für die Herstellung des bitumenhaltigen Bindemittels gemäß irgendeinem der Ansprüche 1-8 geeignet ist, **dadurch gekennzeichnet, dass** sie umfasst:
- mindestens ein Flussmittel F, wie definiert in mindestens einem der Ansprüche 1-4,
- mindestens ein vernetztes oder unvernetztes Polymer P, als bitumenhaltiges Bindemittel,
- und optional mindestens ein Trocknungsmittel S.

10. Bitumen/Granulatzusammensetzung, **dadurch gekennzeichnet, dass** sie ein bitumenhaltiges Bindemittel gemäß irgendeinem der Ansprüche 1-8 enthält und Granulate.

11. Additiv für das Bitumen-Polymer-Bindemittel oder für eine Mutterlösung, **dadurch gekennzeichnet, dass** es enthält:
- mindestens ein Flussmittel F, wie definiert in irgendeinem der Ansprüche 1-4,
- und mindestens ein Trocknungsmittel S.

12. Verwendung
- von mindestens einem Flussmittel F, wie definiert in irgendeinem der Ansprüche 1-4,
- und mindestens eines Trocknungsmittels S,
als Flussmittelsystem in einem Bitumen-Polymer-Bindemittel.

13. Verwendung von mindestens einem vom Rhizinusöl abgeleiteten Bestandteil, welcher Bestandteil mindestens einen Fettsäuremethylester umfasst, als Flussmittel F in einem Bitumen-vernetztes oder nicht-vernetztes Polymer-Flussmittel.

14. Verwendung eines bitumenhaltigen Bindemittels gemäß irgendeinem der Ansprüche 1-8 für die Wartung, Reparatur oder Herstellung von Straßenbelägen.

15. Verwendung des bitumenhaltigen Bindemittels gemäß irgendeinem der Ansprüche 1-8 für die Herstellung einer Oberflächenbeschichtung.

16. Verwendung des bitumenhaltigen Bindemittels gemäß irgendeinem der Ansprüche 1-8 für industrielle Anwendungen.

17. Verwendung des bitumenhaltigen Bindemittels gemäß irgendeinem der Ansprüche 1-8 als Konstruktionsmaterial, Isolationsmaterial, Dämmmaterial und/oder Dichtungsmaterial.
